# EUROPÄISCHE PATENTSCHRIFT

(11) **EP 0 441 142 B1**
(45) Veröffentlichungstag und Bekanntmachung des Hinweises auf die Patenterteilung: **29.06.1994**
(21) Anmeldenummer: 91100540.3
(22) Anmeldetag: 18.01.1991
(51) Int. Cl.: B29C 47/92

(54) **Verfahren zum Betrieb einer Anlage für die Herstellung von biaxial verstreckten Rohren aus Kunststoff**
Functioning method of an installation for manufacturing biaxially stretched plastic tubes
Procédé de fonctionnement d'une installation pour la fabrication de tubes en plastique étirés biaxialement

(30) Priorität: 07.02.1990 DE 4003696
(43) Veröffentlichungstag der Anmeldung: 14.08.1991
(73) Patentinhaber: Petzetakis, George Aristovoulos, GR-183 46 Moschaton, Piraeus (GR)
(72) Erfinder: Tsadares, Adonis, GR-183 46 Moschaton Piraeus (GR); Anastassakis, Costas, Dr., GR-183 46 Moschaton Piraeus (GR)
(74) Vertreter: Andrejewski, Walter

(56) Entgegenhaltungen:
- DE-A- 2 320 343
- DE-A- 2 357 210
- DE-A- 2 900 928
- FR-A- 2 462 254
- FR-A- 2 498 328
- MICROPROCESSORS AND MICROSYSTEMS. Bd. 5, Nr. 1, Januar 1981, LONDON GB Seiten 13 - 18; D. BARKLEY: 'Structural feature extraction in online extrusion of plastics'
- APPLIED PHYSICS LETTERS. Bd. 48, Nr. 6, Februar 1986, NEW YORK US Seiten 393 -395; H. TANAKA: 'Study of banded structure in polymer spherulites by polarised micro-raman spectroscopy'

## Beschreibung

Die Erfindung betrifft ein Verfahren zur Herstellung von biaxial verstreckten Rohren aus thermoplastischem Kunststoff, insbesondere Polyvinylchlorid, unter Verwendung einer Anlage, wobei die Anlage einen in bezug auf den Output steuerbaren oder regelbaren Kunststoff-Extruder mit Werkzeugkopf für das Strangpressen eines hochviskosen Ausgangstubings, einen Verstreckungsdorn mit zylindrischem Auflaufteil, konischem Aufweitungsteil und zylindrischem Abzugsteil sowie eine geschwindigkeitssteuerbare Abzugseinrichtung aufweist, wobei der Auflaufteil des Verstreckungsdornes mit einer Einrichtung zur Einführung eines hydraulischen Gleitmittels zwischen Rohr und Verstreckungsdorn versehen ist, und wobei im Bereich des Auflaufteils ein umgebendes Temperierbad für die Temperierung des Rohres auf Verstreckungstemperatur sowie im Bereich des Abzugsteils ein Kühlbad angeordnet sind. - Der Ausdruck Rohre umfaßt auch Schläuche.

Bei dem bekannten Verfahren, von dem die Erfindung ausgeht (DE-OS 23 57 210), lassen sich im eingefahrenen Zustand der Anlage definierte Orientierungsgrade der Kunststoffmoleküle in axialer Richtung und in Umfangsrichtung des Rohres verwirklichen, beispielsweise mit einer axialen Orientierung im Bereich von 20% und einer Umfangsorientierung von mehr als 30%. Die so definierte Verstreckung bewirkt eine beachtliche Verbesserung der mechanischen Eigenschaften und bei vorgegebenen mechanischen Eigenschaften eine beachtliche Materialersparnis. Im einzelnen gilt für die bekannten Maßnahmen folgendes: Eine definierte Orientierung oder Verstreckung n einem Kunststoffrohr, welches auf einer Anlage, wie sie einleitend beschrieben wurde, hergestellt wird, verlangt stets auch eine bestimmte Temperaturverteilung in der zu verstreckenden Rohrwandung. Dabei wird im Rahmen der bekannten Maßnahmen für eine homogene Temperaturverteilung in der zu verstreckenden Rohrwandung gesorgt, was auf einfache Weise erreichbar ist. Beispielsweise erfolgt die Temperatureinstellung von innen und von außen im Bereich des verlängerten Auflaufteils. Die innere Temperierung geschieht dadurch, daß ein Wärmeaustauschmedium geeigneter Temperatur durch den Auflaufteil des Verstreckungsdornes geführt wird. Die äußere Temperierung geschieht dadurch, daß das Kunststoffrohr im ganzen durch ein geeignetes Bad geführt wird, wobei der Behälter für das Bad in mehrere Kammern aufgeteilt sein kann, die für unterschiedliche Temperaturen eingerichtet sind. Wird das hydraulische Gleitmittel schon im Quasi-Flüssigkeitsbereich des thermoplastifizierten Kunststoffes eingeführt, so stellt sich eine Gleitmittelschleppströmung ein. Diese Gleitmittelschleppströmung zwischen Auflaufzylinder und Rohrinnenwand fördert zusätzlich den Wärmeübergang. Gleichzeitig wird erreicht, daß sich alle Volumenelemente des verstreckenden Rohres mit gleicher Geschwindigkeit (ohne inneren Stoffaustausch) bewegen, was die definierte Temperaturverteilung und deren Aufrechterhaltung in dem zu verstreckenden Rohr unterstützt. Das so vorbereitete Rohr mit seiner definierten und möglichst homogenen Temperaturverteilung erfährt eine Verstreckung oder Orientierung der Kunststoffmoleküle praktisch ohne gleitende Reibung zwischen Rohrinnenwand und Aufweitungsdorn, weil die Bewegung stets auf dem Gleitmittel erfolgt, welches sich als Gleitmittelschleppkeil ausbildet. Überraschenderweise nimmt das Rohr diesen Gleitmittelschleppkeil mit, wenn man dafür sorgt, daß die Aufweitung und dabei die Abkühlung nicht zu plötzlich erfolgen. Der Gleitmittelschleppkeil bildet im Längsschnitt gleichsam eine schiefe Ebene und ein hydraulisches Polster. Es wird verhindert, daß der Gleitmittelschleppkeil im Übergangsbereich zwischen dem zylindrischen Auflaufteil und dem konischen Aufweitungsteil gleichsam abreißt. Die Gleitmittelschleppströmung selbst setzt sich bis in den zylindrischen Abzugsteil des Verstreckungsdornes fort. Das Merkmal "Bildung einer Gleitmittelschleppströmung" macht auch eine Aussage über die eingeführte Gleitmittelmenge. An der Einführungsstelle soll das hydraulische Gleitmittel mehr oder weniger drucklos vorliegen. Das gilt insbesondere bei Einführung im Quasi-Flüssigkeitsbereich. Das hydraulische Gleitmittel wird also mitgeschleppt, nicht aber zwischen Rohr und Verstreckungsdorn eingedrückt. Das schließt nicht aus, daß das Gleitmittel in die entsprechenden Zuführungskanäle mit Druck eingeführt wird, um die Reibungsverluste in den Zuführungskanälen zu überwinden. Die Wirkung des hydraulischen Gleitmittels ist im Rahmen der bekannten Maßnahmen eine hydrodynamische und nicht eine hydrostatische. Wie bereits erwähnt, erfolgt die Temperierung des Kunststoffrohres zweckmäßig von innen nach außen, und zwar im Bereich des verlängerten Auflaufteils. Der Auflaufteil ist so lang, daß diese Temperierung bis zu hinreichend definierter und homogener Temperaturverteilung erreicht wird. Im Bereich des konischen Aufweitungsteils wird das Rohr dann praktisch der ruhenden Luft ausgesetzt. Es kann hier aber auch mit einem flüssigen Kühlmittel gekühlt werden. Jedenfalls wird das Rohr im Bereich des Abzugsteils energisch abgekühlt, wodurch der Gleitmittelschleppkeil eine erhebliche Reduzierung seiner Dicke erfährt. Diese Abkühlung bewirkt eine starke Schrumpfung des Rohres. Die Schrumpfung funktioniert gleichsam als Stopfbuchse und verhindert, daß das verstreckte Rohr Gleitmittel in erheblichem Maße mitnimmt. Im Ergebnis wird der Vorteil erreicht, daß Rohre aus thermoplastischem Kunststoff sehr definiert und mit genau vorgegebenen, auch sehr großen Verstreckungsgraden biaxial verstreckt werden können, wobei die Moleküle die beschriebene biaxiale Orientierung erfahren. Gleichzeitig erreicht man eine sehr genaue Kalibrierung des Innendurchmessers des durch die Verstreckung aufgeweiteten Rohres. Die Orientierungsgrade sind jedoch im Rahmen der bekannten Maßnahmen nicht ohne weiteres betriebsmäßig einzustellen. Auch können unkontrollierte störende Abweichungen von den vorgegebenen Werten auftreten.

Der Erfindung liegt die Aufgabe zugrunde, das vorstehend beschriebene Verfahren so zu führen, daß der Orientierungsgrad zumindest in axialer Richtung, vorzugsweise aber auch in Umfangsrichtung, betriebsmäßig wählbar und mit engen Toleranzen einhaltbar ist.

Zur Lösung dieser Aufgabe lehrt die Erfindung, daß im Bereich hinter dem Kühlbad ein Raman-Spektrometer angeordnet wird, welches mit Laserwellen arbeitet, daß die Frequenz der Laserwellen auf den eingesetzten Kunststoff und die Energie der Laserwellen auf die Wanddicke des hergestellten Rohres derart abgestimmt werden, daß neben der von dem Kunststoff gestreuten oder reflektierten, eingestrahlten Welle zumindest eine einer Raman-Spektrallinie entsprechende Welle von dem Rohr abgestrahlt wird, und daß aus Eigenschaften der an dem Rohr gestreuten bzw. reflektierten und/oder abgestrahlten Welle das Maß der axialen Orientierung und/oder der Umfangsorientierung der Kunststoffmoleküle ermittelt wird, welches dann als Regelgröße für den Kunststoff-Extruder dient. Nach bevorzugter Ausführungsform der Erfindung wird mit einem Raman-Spektrometer gearbeitet , welches monochromatische Laserwellen aussendet.

Zur technologischen Erläuterung der Erfindung wird noch einmal betont, daß erfindungsgemäß im Bereich hinter dem Kühlbad ein Raman-Spektrometer angeordnet wird, welches mit Laserlicht arbeitet, dessen Frequenz derart auf den jeweiligen Kunststoff abgestimmt wird, daß ohne Modifizierung der Probe ein geeigneter Spektralbereich des Raman-Streuungsspektrums erhalten wird. Dieses Spektrum wird in bezug auf unterschiedliche Streuungsgeometrien X(AB) und Y (AB) gemessen. Hierbei bezeichnen X, Y die Richtungen des einfallenden Laserstrahls und des gestreuten Lichtes, während A, B ihre jeweilige Polarisierungen bezeichnen. Die Intensität und/oder die Polarisierung können ausgewertet werden. Der Übergangspolarisierbarkeits-Tensor kann bis zu sechs unabhängige Komponenten aufweisen, so daß detaillierte Informationen über Orientierungseffekte dem Raman-Spektrum grundsätzlich entnommen werden können. Zusätzlich sind verarbeitungsbedingte morphologische Veränderungen feststellbar. Entpolarisierungsverhältnisse und gegenüber der axialen Orientierung der Makromoleküle empfindliche relative Raman-Intensitäten werden einem Rechner zugeführt und in ihm mit programmierbaren Soll-Werten für die axiale Orientierung der Kunststoffmoleküle verglichen. Der Ausstoß des Kunststoff-Extruders und/oder die Geschwindigkeit der Abzugseinrichtung werden nach Maßgabe der Differenz zwischen Soll-Wert und Ist-Wert geregelt.

Die Erfindung geht von der Erkenntnis aus, daß bei der Herstellung von extrudierten Rohren aus Kunststoff, insbesondere aus Polyvinylchlorid, Raman-Linien als Meßwert für die axiale Orientierung oder die Umfangsorientierung der Polymerketten eingesetzt werden können, wenn eine Laserwelle der entsprechenden Frequenz verwendet wird. Die Frequenz wird so gewählt, daß die Laserwellen so wenig Fluoreszenz wie möglich erregen und ausreichend tief in das Kunststoffrohr eindringen, so daß gleichsam eine integrierte Messung erfolgt, ohne daß das Meßergebnis durch Oberflächentexturen verfälscht wird. Der Raman-Effekt ist bekannt: Wenn monochromatisches Licht auf ein Medium trifft, hat der größte Teil des gestreuten Lichts die gleiche Frequenz (zentrale Rayleigh-Linie) wie der einfallende Laserstrahl, während ein viel kleinerer Teil spektrale Komponenten aufweist, welche von der Rayleigh-Spitze verschoben sind. Die Frequenzdifferenz zwischen den Raman-Aktivlinien und der Rayleigh-Zentrallinie wird als die Verschiebung der Raman-Effekt-Linie bezeichnet. Sie ist von der Frequenz der einfallenden Laserwelle unabhängig und wird allein durch die Struktur und den jeweiligen Zustand der streuenden Moleküle - klassisch ausgedrückt durch ihre Polarisierbarkeit - bestimmt. Die Raman-Effekt-Spektrallinien sind daher für die streuenden Moleküle charakteristisch und können dreidimensionale Symmetrien sondieren. In der beschriebenen Art und Weise läßt sich mit Hilfe von einem Laserstrahl der entsprechenden Frequenz und mit Hilfe von Raman-Spektrallinien bzw. deren Polarisierung eine deutliche Aussage über die Orientierung der entsprechenden Moleküle machen. Folglich schafft die Erfindung die Möglichkeit, bei der Herstellung eines Rohres aus Polyvinylchlorid den Orientierungsgrad zumindest in axialer Richtung, vorzugsweise aber auch in Umfangsrichtung, betriebsmäßig zu wählen und mit engen Toleranzen einzuhalten.

Bei symmetrischen Strecken oder Biegen läßt sich eine Kettenorientierung und eine strukturelle Variierung wahrscheinlich leichter erzielen. Relative Intensitäten der Bänder und Aufsplittung können benutzt werden, um strukturelle Informationen in den biaxial gestreckten Kunststoffrohren zu ermitteln. Insbesondere werden diese Größen auf unterschiedliche Orientierungen der Ziehachsen, bezogen auf die Streuungsebene, untersucht werden, d. h. die Polarisierung des einfallenden Lasers wird in der axialen Richtung und/oder Umfangsrichtung gerichtet. Um bedenkliche Hintergrund-Fluoreszenz zu unterdrücken, ist es von entscheidender Bedeutung, ihre Erregung zu vermeiden, und zwar entweder durch die Wahl einer entsprechenden Laserfrequenz im sichtbaren Bereich oder durch Verwendung der weniger aufwendigen Fourier-Transform-Raman-Technik. Diese verwendet als Strahlungsquelle einen Infrarot-Laser mit kontinuierlicher Welle und benutzt einen Fourier-Transform-Interferometer zur Aufzeichnung des Raman-Spektrums. Der endgültige Aufbau sowie die Versuchsbedingungen werden hauptsächlich von der Farbe der Polyvinylchloridrohre abhängen.

Im einzelnen bestehen im Rahmen der Erfindung mehrere Möglichkeiten zur Durchführung des Verfahrens. Eine Ausführungsform ist dadurch gekennzeichnet, daß die Intensität der abgestrahlten, einer Raman-Spektrallinie entsprechenden Welle als Ist-Wert für die axiale Orientierung der Kunststoffmoleküle gemessen sowie einem Rechner zugeführt wird und in dem Rechner mit vorgebbaren Soll-Werten für die axiale Orientierung der Kunststoffmoleküle verglichen wird und daß der Output des Kunststoff-Extruders und/oder die Geschwindigkeit der Abzugseinrichtung nach Maßgabe der Differenz zwischen Soll-Wert und Ist-Wert geregelt werden. Eine weitere Ausführungsform ist dadurch gekennzeichnet, daß mit polarisierten Laserwellen gearbeitet wird und daß die Änderung der Polarisation der gestreuten bzw. reflektierten und/oder abgestrahlten Welle gegenüber der Polarisation der einfallenden Welle als Maß für die axiale Orientierung der Kunststoffmoleküle ermittelt wird. Eine bevorzugte Ausführungsform ist in diesem Zusammenhang dadurch gekennzeichnet, daß die Polarisation der gestreuten bzw. reflektierten und/oder abgestrahlten Welle als Ist-Wert für die axiale Orientierung der Kunststoffmoleküle gemessen sowie einem Rechner zugeführt wird und in dem Rechner mit vorgebbaren Soll-Werten für die axiale Orientierung der Kunststoffmoleküle verglichen wird und daß der Output des Kunststoff-Extruders und/oder die Geschwindigkeit der Abzugseinrichtung nach Maßgabe der Differenz zwischen Soll-Wert und Ist-Wert geregelt werden. Das Meßverfahren, welches mit polarisierten Laserwellen arbeitet, wird auch als ellipsometrische Meßmethode bezeichnet. - Die beschriebenen Maßnahmen können auch zur Steuerung oder Regelung der Umfangsorientierung eingesetzt werden, und zwar dadurch, daß entsprechend die Umfangsorientierung der Kunststoffmoleküle gemessen sowie einem Rechner zugeführt wird und in dem Rechner mit vorgebbaren Soll-Werten für die Umfangsorientierung der Kunststoffmoleküle verglichen wird sowie die Temperatur des Kühlbades und/oder die Temperatur des Temperierbades und/oder des Verstreckungsdornes nach Maßgabe der Differenz zwischen Soll-Wert und Ist-Wert geregelt wird.

Eine weitere Ausgestaltung des erfindungsgemäßen Verfahrens zur Einstellung oder Regelung der axialen Orientierung ist dadurch gekennzeichnet, daß außerdem zum Zwecke der Einstellung oder Regelung der axialen Orientierung der Kunststoffmoleküle die Temperatur des Kühlbades und/oder die Temperatur des Temperierbades und/oder des Verstreckungsdornes nach Maßgabe der Differenz zwischen Soll-Wert und Ist-Wert geregelt werden. In bezug auf die Umfangsorientierung kann insoweit so vorgegangen werden, daß außerdem zum Zwecke der Einstellung oder Regelung der Umfangsorientierung der Kunststoffmoleküle der Output des Kunststoff-Extruders und/oder die Geschwindigkeit der Abzugseinrichtung nach Maßgabe der Differenz zwischen Soll-Wert und Ist-Wert geregelt werden. In allen Fällen empfiehlt es sich, mit Laserwellen im Infrarotbereich zu arbeiten. Im Rahmen der Erfindung liegt es, mit diffusen Laserwellen zu arbeiten, wobei die Intensität der abgestrahlten Raman-Effekt-Spektrallinie in Umfangsrichtung des Rohres und/oder in radialer Richtung des Rohres gemessen wird und diese Intensitäten als Maß für die Molekularorientierung in dieser Richtung ausgewertet werden.

Im folgenden wird die Erfindung anhand einer lediglich ein Ausführungsbeispiel darstellenden Zeichnung ausführlicher erläutert. Es zeigen
- Fig. 1: einen Längsschnitt durch eine Anlage, die für das erfindungsgemäße Verfahren eingerichtet ist,
- Fig. 2: das Schema eines Raman-Spektrometers, mit dem in der Anlage gemäß Fig. 1 gearbeitet wird.

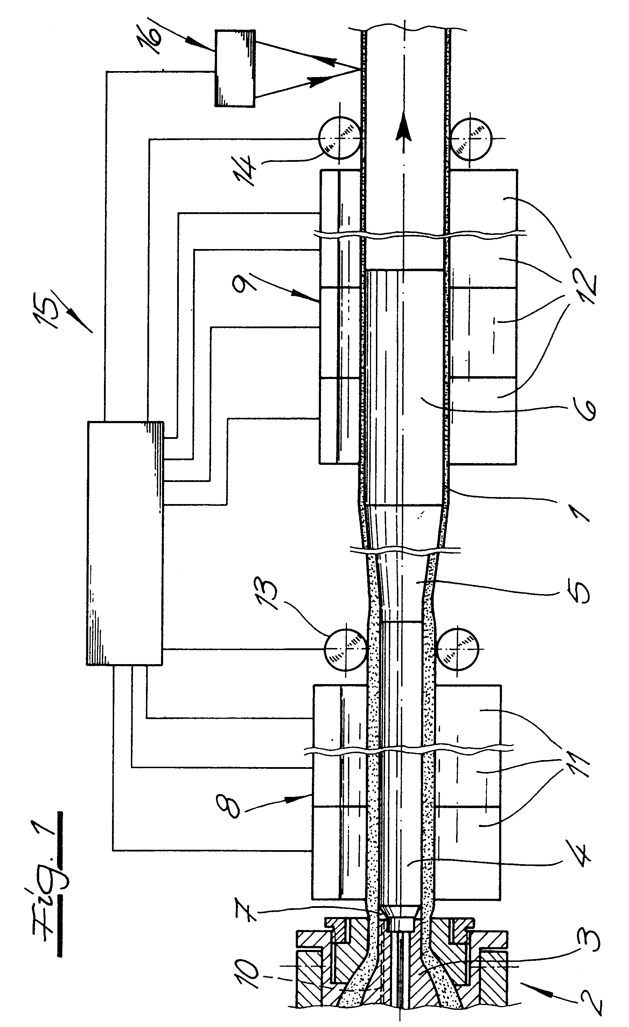

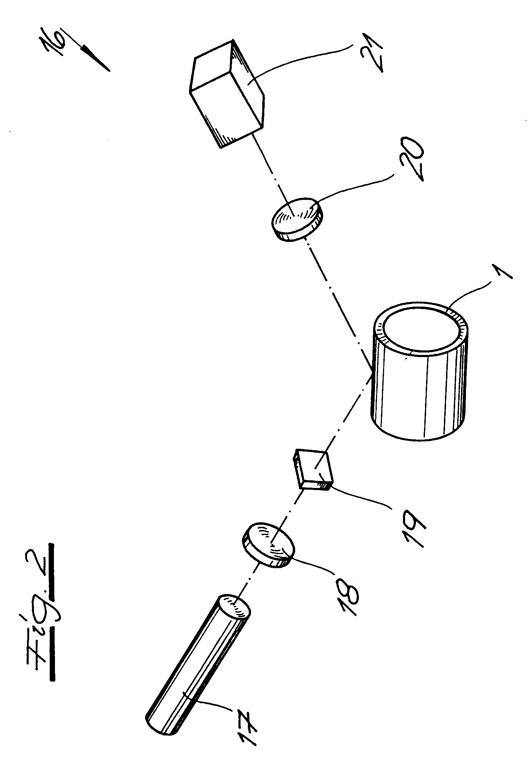

Die in Fig. 1 dargestellte Anlage dient zum biaxialen Verstrecken eines Rohres 1 aus verstreckbarem Kunststoff, wobei das Rohr 1 als Quasi-Flüssigkeit im hochviskosen Zustand aus einem Spritzkopf 2 mit Spritzdorn 3 herausgedrückt, temperiert und über einen Verstreckungsdorn 4, 5, 6 aus zylindrischem Auflaufteil 4, konischem Aufweitungsteil 5 und zylindrischem Abzugsteil 6 abgezogen sowie von außen abgekühlt und dabei bis zum standfesten Rohr verfestigt wird. Vorgeschaltet ist dem Spritzkopf 2 eine nicht gezeichnete Kunststoffschneckenpresse. Das Auflaufteil 4 ist an den Spritzdorn 3 angeschlossen (und damit gegenüber bekannten Ausführungsformen nach rückwärts zum Spritzkopf 2 hin beachtlich verlängert). Eine Einrichtung 7 zur Einführung eines hydraulischen Gleitmittels zwischen Rohr 1 und Verstreckungsdorn 4, 5, 6 ist vorgesehen. Im Bereich des verlängerten Auflaufteils 4 ist ein das Auflaufteil 4 des Verstreckungsdornes 4, 5, 6 und damit das zu verstreckende Rohr 1 umgebendes Temperierband 8 für die Temperierung des Rohres 1 auf Verstreckungstemperatur angeordnet, während im Bereich des Ablaufteils 6 des Verstreckungsdornes 4, 5, 6 ein Kühlbad 9 angeordnet ist. Die Einrichtung 7 zur Einführung des hydraulischen Gleitmittels besteht aus einer Rille 7 mit Gleitmittelzuführungsbohrungen 10 im Spritzkopf 2, wobei diese Rille 7 in Abzugsrichtung konisch in die Oberfläche des Auflaufteils 4 übergeht. Das Temperierbad ist in einem Temperierbehälter 8 mit mehreren Temperierkammern 11 untergebracht, wobei die Temperierkammern 11 auf unterschiedliche Temperiertemperatur einstellbar sind, indem entsprechend erwärmte Temperierflüssigkeit in diese Kammern 11 eingeführt wird. Insoweit ist die Temperatur steuerbar oder regelbar. Entsprechend ist das Kühlbad im Bereich des zylindrischen Abzugsteils 6 in einem Kühlbehälter 9 untergebracht, der ebenfalls mehrere Kammern 12 aufweisen kann. Das konische Aufweitungsteil 5 ist schwach konisch ausgeführt. Sein maximaler Durchmesser bestimmt den Verstreckungsgrad in Umfangsrichtung. Hier kann der Knick zwischen den beiden Teilen 4, 5 im übrigen durch einen Bogen ersetzt sein. Eine Abzugsvorrichtung 13 arbeitet hinter dem Temperierbehälter 8. Ihre Geschwindigkeit entspricht praktisch der Extrusionsgeschwindigkeit. Die Geschwindigkeitsdifferenz zwischen dieser Abzugsvorrichtung 13 und der nachgeschalteten Abzugsvorrichtung 14 bestimmt den Verstreckungsgrad in axialer Richtung. Im Ergebnis erreicht man, daß das Rohr 1 im Bereich des bis zum Spritzkopf 2 nach rückwärts verlängerten Auflaufteils 4 auf Verstreckungstemperatur temperiert wird, daß im Quasi-Flüssigkeitsbereich bei 7 zwischen Rohr 1 und Auflaufteil 4 ein hydraulisches Gleitmittel zur Bildung einer Gleitmittelschleppströmung eingeführt wird, so daß das Rohr 1 auf der Gleitmittelschleppströmung geführt wird. In der Fig. 1 sind regeltechnische bzw. steuerungstechnische Einrichtungen 15 als Blockschaltbild dargestellt. Die Einrichtungen erlauben es, die Strangpreßgeschwindigkeit des Extruders, die Abzugsvorrichtungen 13, 14 und damit die Verstreckung, die Temperatur der Flüssigkeit im Temperierbehälter 8 und die Temperatur der Kühlflüssigkeit im Kühlbehälter 9 zu steuern bzw. zu regeln. Die Steuerung oder Regelung erfolgt nach Maßgabe eines Raman-Spektrometers 16. Insoweit wird auf die Fig. 2 verwiesen.

In der Fig. 2 erkennt man den Laser 17, der zu dem Raman-Spektrometer gehört und einen Polarisator 18. Dem Polarisator 18 ist in Strahlrichtung eine Viertel-Wellenplatte 19 nachgeschaltet. Das polarisierte Licht fällt auf die angedeutete Oberfläche des Kunststoffrohres 1. Dabei wird eine Raman-Spektrallinie ausgelöst. Diese fällt über einen anderen Polarisator 20, der als Analysator arbeitet, auf den photoelektrischen Detektor 21. - Entsprechend wird gearbeitet, wenn nicht mit polarisierten Laserwellen gearbeitet wird, sondern die Intensität der abgestrahlten, einer Raman-Spektrallinie entsprechenden Welle gemessen wird.

## Patentansprüche

1. Verfahren zur Herstellung von biaxial verstreckten Rohren aus thermoplastischem Kunststoff, insbesondere Polyvinylchlorid, unter Verwendung einer Anlage, die einen in bezug auf den Output steuerbaren oder regelbaren Kunststoff-Extruder mit Werkzeugkopf des Verstreckungsdornes für das Strangpressen eines hochviskosen Ausgangstubings, einen Verstreckungsdorn mit zylindrischem Auflaufteil, konischem Aufweitungsteil und zylindrischem Abzugsteil sowie eine geschwindigkeitssteuerbare Abzugseinrichtung aufweist, wobei im Bereich des Auflaufteils ein umgebendes Temperierbad für die Temperierung des Rohres auf Verstreckungstemperatur sowie im Bereich des Abzugsteils ein Kühlbad angeordnet sind, **dadurch gekennzeichnet**, daß im Bereich hinter dem Kühlbad ein Raman-Spektrometer angeordnet wird, welches mit Laserwellen arbeitet,
daß die Frequenz der Laserwellen auf den eingesetzten Kunststoff und die Energie der Laserwellen auf die Wanddicke des hergestellten Rohres derart abgestimmt werden, daß neben der von dem Kunststoff gestreuten oder reflektierten, eingestrahlten Welle zumindest eine einer Raman-Spektrallinie entsprechende Welle von dem Rohr abgestrahlt wird,
und daß aus Eigenschaften der an dem Rohr gestreuten bzw. reflektierten und/oder abgestrahlten Welle das Maß der axialen Orientierung und/oder der Umfangsorientierung der Kunststoffmoleküle ermittelt wird, welches dann als Regelgröße für den Kunststoff-Extruder dient.

2. Verfahren nach Anspruch 1, dadurch gekennzeichnet, daß mit einem Raman-Spektrometer gearbeitet wird, welches monochromatische Lichtwellen aussendet.

3. Verfahren nach einem der Ansprüche 1 oder 2, dadurch gekennzeichnet, daß die Intensität der abgestrahlten, einer Raman-Spektrallinie entsprechenden Welle als Ist-Wert für die axiale Orientierung der Kunststoffmoleküle gemessen sowie einem Rechner zugeführt wird und in dem Rechner mit vorgebbaren Soll-Werten für die axiale Orientierung der Kunststoffmoleküle verglichen wird und daß der Output des Kunststoff-Extruders und/oder die Geschwindigkeit der Abzugseinrichtung nach Maßgabe der Differenz zwischen Soll-Wert und Ist-Wert geregelt werden.

4. Verfahren nach einem der Ansprüche 1 oder 2, dadurch gekennzeichnet, daß mit polarisierten Laserwellen gearbeitet wird und daß die Änderung der Polarisation der gestreuten bzw. reflektierten und/oder abgestrahlten Welle gegenüber der Polarisation der einfallenden Welle als Maß für die axiale Orientierung der Kunststoffmoleküle ermittelt wird.

5. Verfahren nach Anspruch 4, dadurch gekennzeichnet, daß die Polarisation der gestreuten bzw. reflektierten und/oder abgestrahlten Welle als Ist-Wert für die axiale Orientierung der Kunststoffmoleküle gemessen sowie einem Rechner zugeführt wird und in dem Rechner mit vorgebbaren Soll-Werten für die axiale Orientierung der Kunststoffmoleküle verglichen wird und daß der Output des Kunststoff-Extruders und/oder die Geschwindigkeit der Abzugseinrichtung nach Maßgabe der Differenz zwischen Soll-Wert und Ist-Wert geregelt werden.

6. Verfahren nach einem der Ansprüche 1 bis 5, dadurch gekennzeichnet, daß entsprechend die Umfangsorientierung der Kunststoffmoleküle gemessen sowie einem Rechner zugeführt wird und in dem Rechner mit vorgebbaren Soll-Werten für die Umfangsorientierung der Kunststoffmoleküle verglichen wird sowie die Temperatur des Kühlbades und/oder die Temperatur des Temperierbades und/oder des Verstreckungsdornes nach Maßgabe der Differenz zwischen Soll-Wert und Ist-Wert geregelt wird.

7. Verfahren nach einem der Ansprüche 1 bis 5, dadurch gekennzeichnet, daß außerdem zum Zwecke der Einstellung oder Regelung der axialen Orientierung der Kunststoffmoleküle die Temperatur des Kühlbades und/oder die Temperatur des Temperierbades und/oder des Verstreckungsdornes nach Maßgabe der Differenz zwischen Soll-Wert und Ist-Wert geregelt werden.

8. Verfahren nach Anspruch 6, dadurch gekennzeichnet, daß außerdem zum Zwecke der Einstellung oder Regelung der Umfangsorientierung der Kunststoffmoleküle der Output des Kunststoff-Extruders und/oder die Geschwindigkeit der Abzugseinrichtung nach Maßgabe der Differenz zwischen Soll-Wert und Ist-Wert geregelt werden.

9. Verfahren nach einem der Ansprüche 1 bis 8, dadurch gekennzeichnet, daß mit Laserwellen im Infrarotbereich gearbeitet wird.

10. Verfahren nach einem der Ansprüche 1 bis 8, dadurch gekennzeichnet, daß mit diffusen Laserwellen gearbeitet wird, daß die Intensität der abgestrahlten Raman-Effekt-Spektrallinie in Umfangsrichtung des Rohres und/oder in radialer Richtung des Rohres gemessen wird, und daß diese Intensitäten als Maß für die Molekularorientierung in dieser Richtung ausgewertet werden.

## Claims

1. A process for manufacturing biaxially stretched tubes of synthetic thermoplastic material, particularly polyvinyl chloride, using an installation which comprises a synthetic material extruder which is controllable or adjustable with respect to its output with a tool head on the stretching mandrel for the extrusion of highly viscous starting material tubing, a stretching mandrel with a cylindrical leading portion, a tapered expansion portion and a cylindrical pull-off portion and with a speed-controlled pull-off device, wherein a surrounding temperature equalisation bath for bringing the temperature of the tube to the stretching temperature is disposed in the region of the leading portion and a cooling bath is disposed in the region of the pull-off portion, characterised in that a Raman spectrometer which operates with laser waves is disposed in the region downstream of the cooling bath,
that the frequency of the laser waves is tuned to the synthetic material used and the energy of the laser waves is tuned to the wall thickness of the manufactured tube in such a way that in addition to the irradiated wave which is scattered or reflected by the synthetic material at least one wave corresponding to a Raman spectral line is radiated by the tube,
and that the extent of the axial orientation and/or the circumferential orientation of the molecules of synthetic material is determined from properties of the wave which is scattered or reflected and/or radiated at the tube, which extent of orientation then serves as a regulating variable for the synthetic material extruder.

2. A process according to claim 1, characterised in that a Raman spectrometer is employed which emits monochromatic light waves.

3. A process according to either one of claims 1 or 2, characterised in that the intensity of the radiated wave which corresponds to a Raman spectral line is measured as the actual value for the axial orientation of the molecules of synthetic material and is fed to a computer, and is compared in the computer with presettable set values for the axial orientation of the molecules of synthetic material, and that the output of the synthetic material extruder and/or the speed of the pull-off device are regulated according to the difference between the set value and the actual value.

4. A process according to either one of claims 1 or 2, characterised in that polarised laser waves are employed and that the change in polarisation of the scattered or reflected and/or radiated wave is determined in relation to the polarisation of the incident wave as a measure of the axial orientation of the molecules of synthetic material.

5. A process according to claim 4, characterised in that the polarisation of the scattered or reflected and/or radiated wave is measured as the actual value for the axial orientation of the molecules of synthetic material and is fed to a computer, and is compared in the computer with presettable set values for the axial orientation of the molecules of synthetic material, and that the output of the synthetic material extruder and/or the speed of the pull-off device are regulated according to the difference between the set value and the actual value.

6. A process according to any one of claims 1 to 5, characterised in that the circumferential orientation of the molecules of synthetic material is correspondingly measured and fed to a computer and is compared in the computer with presettable set values for the circumferential orientation of the molecules of synthetic material, and the temperature of the cooling bath and/or the temperature of the temperature equalisation bath and/or of the stretching mandrel are regulated according to the difference between the actual value and the set value.

7. A process according to any one of claims 1 to 5, characterised in that in addition, for the purpose of adjusting or regulating the axial orientation of the molecules of synthetic material, the temperature of the cooling bath and/or the temperature of the temperature equalisation bath and/or of the stretching mandrel are regulated according to the difference between the set value and the actual value.

8. A process according to claim 6, characterised in that in addition, for the purpose of adjusting or regulating the circumferential orientation of the molecules of synthetic material, the output of the synthetic material extruder and/or the speed of the pull-off device are regulated according to the difference between the set value and the actual value.

9. A process according to any one of claims 1 to 8, characterised in that laser waves in the infrared region are employed.

10. A process according to any one of claims 1 to 8, characterised in that diffuse laser waves are employed, that the intensity of the radiated Raman effect spectral line is measured in the circumferential direction of the tube and/or in the radial direction of the tube, and that these intensities are evaluated as a measure of the molecular orientation in this direction.

## Revendications

1. Procédé pour la fabrication de tubes étirés biaxialement en matière thermoplastique, en particulier au en polychlorure de vinyle (PVC), avec utilisation d'une installation qui comprend une extrudeuse pour matière plastique pouvant être régulée ou pilotée en ce qui concerne son rendement, munie d'un outil placé à la pointe du mandrin d'étirage afin d'extruder un tuba brut à haute viscosité, un mandrin d'étirage comportant une partie initiale cylindrique, une partie de dilatation conique et une partie d'extraction cylindrique, ainsi qu'un dispositif d'extraction à vitesse réglable, tandis que dans la zone de la partie initiale, est disposé un bain d'équilibrage thermique pour amener le tube à la température d'étirage et, dans la zone de la partie d'extraction, est disposé un bain réfrigérant, caractérisé en ce que, dans la zone placée en aval du bain réfrigérant, est disposé un spectromètre Raman qui fonctionne aux ondes laser, en ce que la fréquence des ondes laser est accordée à la matière plastique utilisée et l'énergie des ondes laser à l'épaisseur de la paroi du tube fabriqué, en ce que, outre l'onde irradiée, dispersée ou réfléchie par la matière plastique, au moins une onde correspondant à une raie du spectre Raman est émise par le tube et, en ce que, à partir des propriétés de l'onde émise et/ou réfléchie ou dispersée sur le tube, on obtient la mesure de l'orientation axiale et/ou de l'orientation périphérique de la molécule de matière plastique, cette mesure servant ensuite de paramètre pour régler l'extrudeuse pour matière plastique.

2. Procédé selon la revendication 1, caractérisé en ce que l'on travaille avec un spectromètre Raman qui émet des ondes lumineuses monochromes.

3. Procédé selon la revendication 1 ou 2, caractérisé en ce que l'intensité de l'onde émise correspondant à une raie du spectre Raman est mesurée pour servir de valeur effective à l'orientation axiale de la molécule de matière plastique, en ce qu'elle est amenée à un ordinateur et comparée à l'intérieur de celui-ci à des valeurs théoriques prédéterminées de cette orientation axiale de la molécule de matière plastique, et en ce que le rendement de l'extrudeuse et/ou la vitesse du dispositif d'extraction sont réglés en tenant compte de la différence entre la valeur théorique et la valeur effective.

4. Procédé selon la revendication 1 ou 2, caractérisé en ce que l'on travaille avec des ondes laser polarisées et en ce que l'on calcule le changement de la polarisation de l'onde émise et/ou dispersée et réfléchie par rapport à la polarisation de l'onde incidente, pour servir de mesure à l'orientation axiale de la molécule de matière plastique.

5. Procédé selon la revendication 4, caractérisé en ce que la polarisation de l'onde émise et/ou dispersée ou réfléchie est mesurée pour servir de valeur effective à l'orientation axiale de la molécule de matière plastique, est amenée à un ordinateur et, à l'intérieur de celui-ci, comparée avec des valeurs théoriques pouvant être prédéterminées de cette orientation axiale de la molécule de matière plastique, et en ce que le rendement de l'extrudeuse pour matière plastique et/ou la vitesse du dispositif d'extraction sont réglés en tenant compte de la différence entre la valeur théorique et la valeur effective.

6. Procédé selon l'une des revendications 1 à 5, caractérisé en ce que l'orientation périphérique de la molécule de matière plastique est mesurée et amenée à un ordinateur à l'intérieur duquel elle est comparée avec des valeurs théoriques pouvant être prédéterminées pour cette orientation périphérique de la molécule de matière plastique, et en ce que la température du bain réfrigérant et/ou la température du bain d'équilibrage de la température et/ou du mandrin d'étirage sont réglées compte tenu de la différence entre la valeur théorique et la valeur effective.

7. Procédé selon l'une des revendications 1 à 5, caractérisé en ce que, en outre, aux fins du réglage de l'orientation axiale de la molécule de matière plastique, la température du bain réfrigérant et/ou la température du bain d'équilibrage de la température et/ou du mandrin d'étirage sont réglées en tenant compte de la différence entre la valeur théorique et la valeur effective.

8. Procédé selon la revendication 6, caractérisé en ce que, en outre, aux fins du réglage de l'orientation périphérique de la molécule de matière plastique, le rendement de l'extrudeuse et/ou la vitesse du dispositif d'extraction sont réglés en tenant compte de la différence entre la valeur théorique et la valeur effective.

9. Procédé selon l'une des revendications 1 à 8, caractérisé en ce que l'on travaille avec des ondes laser dans la plage des rayons infrarouges.

10. Procédé selon l'une des revendications 1 à 8, caractérisé en ce que l'on travaille avec des ondes laser diffuses, en ce que l'intensité de la raie du spectre Raman émise est mesurée en direction périphérique du tube et/ou en direction radiale dudit tube, et en ce que ces intensités sont utilisées pour servir de paramètres à l'orientation moléculaire dans cette direction.
